# EUROPEAN PATENT APPLICATION

(11) **EP 1 986 377 A1**
(43) Date of publication of application: **29.10.2008**
(21) Application number: 07706568.8
(22) Date of filing: 11.01.2007
(51) Int. Cl.: H04L 12/56

(54) **NETWORK CONTROLLER, NETWORK SYSTEM, PROGRAM, COMMUNICATION TERMINAL, AND MOBILE COMMUNICATION NETWORK CONTROL METHOD**

(30) Priority: 17.01.2006 JP 2006008566
(71) Applicant: Sharp Kabushiki Kaisha, Osaka-shi, Osaka 545-8522 (JP)
(72) Inventor: MORIWAKI, Tetsuro, Saitama 330-0071 (JP); HIBI, Keiichi, Matsudo-Shi Chiba 270-0034 (JP); YAMADA, Shohei, Chiba 261-0004 (JP)
(74) Representative: Brown, Kenneth Richard
(86) International application number: PCT/JP2007/050221
(87) International publication number: WO 2007/083557

(57) **Abstract**

A location registration/attach request is transmitted from a communication terminal to a network control apparatus. The network control apparatus performs location registration processing for a mobility management apparatus based on the received location registration/attach request. Moreover, the network control apparatus transmits the user registration request to a session control apparatus and executes user registration and authentication processing. Then, result of the location registration and the user registration is transmitted to the communication terminal. Thereby, means for integrating control information is provided, as well as registration processing by cooperation between layers is realized, processing procedure performed by the communication terminal at the start of communication and processing loads are reduced, thus providing the network control apparatus and the like for realizing elimination of the connection delay.

## Description

### THECHNICAL FIELD

The present invention relates to a network control apparatus and the like connected to a mobile communication network system comprising a communication terminal, a mobility management apparatus for managing a location of the communication terminal, and a session control apparatus for controlling a communication session between the communication terminal and a communication partner.

### BACKGROUND ART

In a mobile communication field represented by an IMT-2000, a large-capacity multimedia service such as moving images in addition to voice has been recently required. To provide such a large-capacity multimedia service efficiently, on the basis of not a conventional circuit switched system but an IP (Internet Protocol) communication technology which was constructed with the development of the internet, a mobile communication network is provided with an IP core network as control means and transmission means for transmitting an IP efficiently and performs basic control such as authentication of a communication terminal and mobile management. Furthermore, networks on the basis of the line exchange have been converged so as to gradually integrate into the packet-based network (for example, see Patent Document 1).

Moreover, recently, in order to perform transmission control of the large-capacity multimedia service or a real time multimedia service while guaranteeing the quality in real time, the mobile communication network is added with an IP multimedia core network subsystem (IMS) to conrol the IP core network.
Patent Document 1: Japanese Patent Publication Laid-Open No. 2004-320702

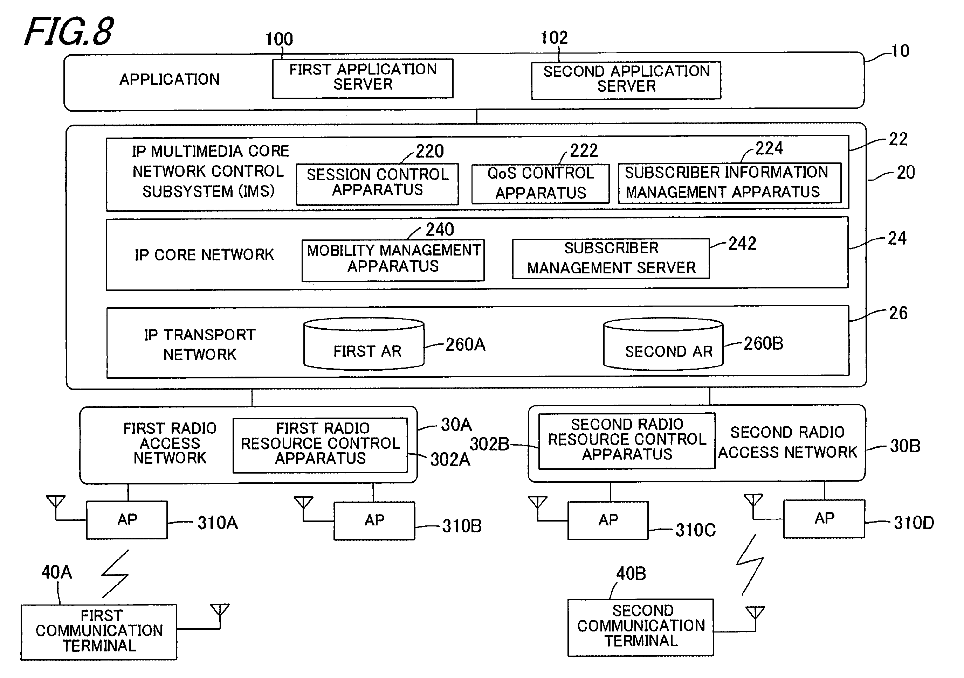

FIG. 8 shows an embodiment of the structure of the conventional mobile communication network as described above. A mobile communication network 20 shown in FIG. 8 is composed of three networks (services), including an IP multimedia core network control subsystem (IMS) 22, an IP core network 24, and an IP transport network 26. Here, the IP multimedia core network control subsystem (IMS) is a subsystem which is activated at the time of performing a real time multimedia service such as video phone and two-way group communication, and is not basically used for other types of services such as streaming distribution, mail, and web browsing.

Here, the IP multimedia core network control subsystem 22 is arranged with a session control apparatus 220 for controlling establishment, maintenance, change, and termination of a communication session of a communication terminal, a QoS control apparatus 222 for setting a QoS which is necessary for executing a session, and a subscriber information management apparatus 224 for identifying and authenticating a user (a subscriber) who owns the communication terminal.

Furthermore, the IP core network 24 is a network for performing basic control when communication is performed, such as location management and mobility management of the communication terminal and setting of a transmission path. The IP core network 24 is arranged with a subscriber management server 242, and receives an attach request signal which is transmitted when the communication terminal is activated by the user so as to be usable, to identify and authenticate the subscriber. The reason of being arranged in the IP core network separately from the subscriber information management apparatus 224 is that the subscriber management server is provided as a function of authenticating and managing a subscriber in a past mobile communication network before the IMS is added thereto, and that the subscriber information management apparatus is required to be arranged also in the IMS with the trend of development in the real time multimedia by the IP. The subscriber information management apparatus 224 is used for the real time multimedia service using the IMS service and the subscriber management server 242 is used for other services.

Furthermore, the IP core network 24 is provided with a mobility management apparatus 240, and manages a location of a communication terminal located in a routing area (a geographic range managed by an access point (AP) under the control of a radio access network). Specifically, when the communication terminal performs location registration, an identifier of the communication terminal, an AP where it is located, and an address of an access router (AR) are managed in association with one another. Thus, for example, when a service initiation request is made from a second communication terminal 40B to a first communication terminal 40A, the mobility management apparatus 240 can specify an AP (herein an AP 310A) and an AR (herein an AR 260A) in the located location of the first communication terminal 40A, and the service initiation request can be made through the AP and the AR to the first communication terminal 40A.

Furthermore, the mobility management apparatus 240 specifies and activates an AR to which the communication terminal is served at the start of communication. The activated AR allocates an IP address for setting a transmission path separately from the identifier unique to the communication terminal, and the IP address is notified to the mobility management apparatus in association with an address of the AR, thus it is possible that the mobility management apparatus manages IP addresses and AR addresses of communication terminals in both of a service initiation requesting side and a receiving side, so that a transmission path between communication terminals in the IP transport network can be set.

An AR arranged in the IP transport network 26 is a router for performing transfer of control signals and data between communication terminals and each control apparatus, and is arranged corresponding to the radio access network. Moreover, as described above, the IP address for setting a transmission path is allocated to the communication terminal to be held at the start of communication, and notification is made to the mobility management apparatus 240. In addition, a resource setting instruction is received from the QoS control apparatus 222 to secure the transmission capacity (band) and execute data transfer. In FIG. 8, a first AR 260A corresponding to a first radio access network 30A and a second AR 260B corresponding to a second radio access network 30B are arranged.

The radio access networks are configured and arranged for each radio access type. A radio resource control apparatus 302 in the radio access network manages the state of a radio resource (such as available bandwidths, and a propagation path state), and secures a radio transmission path in a necessary bandwidth with a communication terminal through a radio section. In FIG. 8, a first radio resource control apparatus 302A is arranged in the first radio access network 30A and a second radio resource control apparatus 302B is arranged in the second radio access network 30B.

An AP (access point) serves as an interface point with the communication terminal through the radio transmission path. The communication terminal is to be connected to the radio access network through the AP. In FIG. 8, the AP 310A and the AP 310B are arranged in the first radio access network 30A, and an AP 310C and an AP 310D are arranged in the second radio access network 30B.

A communication terminal 40 is a communication terminal which includes radio access means, has a subscriber identifier, and has processing execution means for an application. In FIG. 8, as the communication terminal 40, the communication terminal 40A and the communication terminal 40B are arranged. In addition, the communication terminal 40A is connected to the radio access network 30A, for example, through the AP 310A.

Moreover, in an application 10, a first application server 100 and a second application server 102 are arranged. These servers execute each application in accordance with types of a requested application included in service initiation requests from each communication terminal 40.

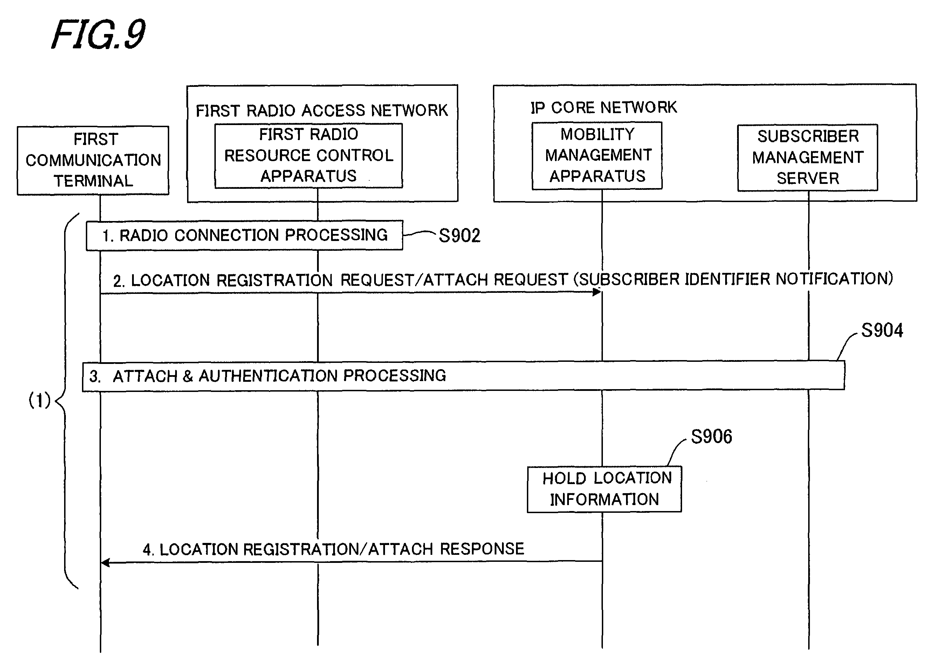

Next, processing procedure by the time of starting communication with a conventional technology will be described referring to the drawings. First, according to procedure (1) shown in FIG. 9, when the first communication terminal 40A is activated, radio connection processing is executed to be connected to the radio resource control apparatus 302A (S902). Subsequently, a control signal of location registration request/attach request is transmitted from the first communication terminal 40A to the mobility management apparatus 240 arranged in the IP core network 24.

The mobility management apparatus 240 notifies the subscriber management server 242 of a subscriber identifier of the first communication terminal 40A, and performs authentication processing in the subscriber management server 242 (S904). At this time, the control signal of the location registration request/attach request from communication terminal 40A is transmitted using a location registration request/attach request message of a layer 3 protocol.

In addition, location information of the first communication terminal 40A is held by the mobility management apparatus 240 (S906). Moreover, the mobility management apparatus 240 transmits a control signal of "location registration/attach response" to the first communication terminal 40A.

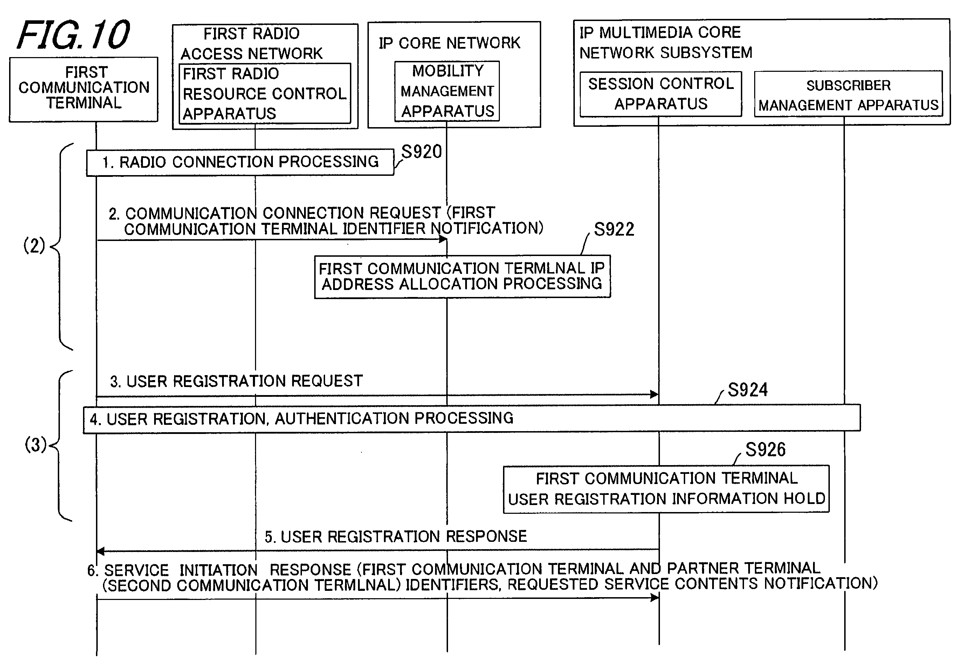

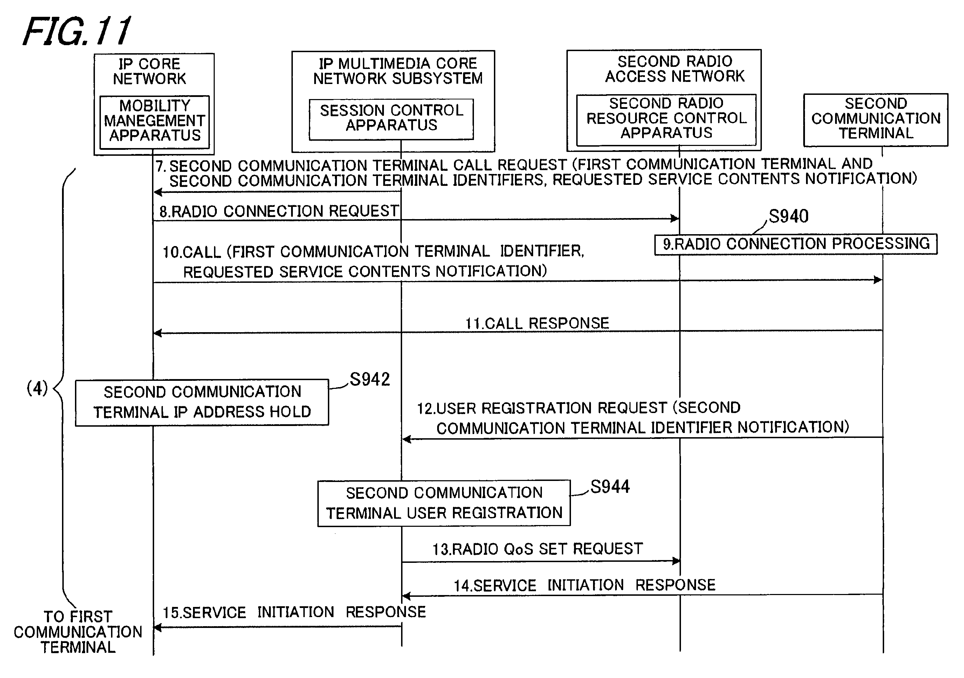

Next, using FIG. 10 and FIG. 11, procedure by the time of setting a virtual transmission path when communication is started to start the communication will be described. The setting of a virtual transmission path is to set for allocating an IP address for identifying a logical location of a communication terminal in packet communication using an IP, and to set as a path between an IP core network and a communication terminal and a path between an IP core network and a destination communication terminal, not as a physical path for end-to-end in which a specific communication partner is specified. Note that, the setting of a virtual transmission path is started at the time of starting communication on the premise that the setting (1) in FIG. 9 has been made.

According to procedure (2) in FIG. 10, the first communication terminal 40A executes radio connection processing to be connected to the radio resource control apparatus 302A (S920). Then, access to the mobility management apparatus 240 of the IP core network 24 is performed to transmit a control signal of a communication connection request (identifier information of the first communication terminal 40A). Here, the mobility management apparatus 240 activates an AR so that the AR allocates an IP address for setting a virtual transmission path to the first communication terminal 40A, and receives and holds notification of the IP address from the AR (S922).

Subsequently, according to procedure (3) in FIG. 10, the first communication terminal 40A transmits a user registration request to the session control apparatus 220 of the IMS 22. Here, a control signal of the user registration request is transmitted by including an own identifier and an identification number (such as SIP-URI and E164) of the first communication terminal 40A thereto. Thus, authentication in the subscriber information management apparatus 224 based on the identifier and user registration and authentication processing in the session control apparatus 220 based on the identification number are performed (S924). Then, the session control apparatus 220 holds user registration information of the first communication terminal 40A (S926) and transmits a response signal that the user registration has been performed to the first communication terminal 40A.

Furthermore, the first communication terminal 40A transmits a service initiation request in which an identification number of the second communication terminal 40B to be a communication partner is specified, to the session control apparatus. Note that, a service initiation request message of an SIP (Session Initiation Protocol) is used for transmission/reception of the control signal with the session control apparatus.

Subsequently, according to procedure (4) in FIG. 11, the session control apparatus 220 requests call from the mobility management apparatus 240 which manages a location of the second communication terminal 40B, and the mobility management apparatus 240 performs call to the second communication terminal 40B by the second radio resource control apparatus 302B. Note that, here, a communication path is being secured between the second communication terminal 40B and the second radio resource control apparatus 302B by the radio connection processing (S940).

When the second communication terminal 40B responds to the call, the mobility management apparatus 240 activates an AR to which the second communication terminal 40B is served, so that the AR allocates an IP address for setting a virtual transmission path to the second communication terminal 40B, and receives notification of the IP address from the AR and holds it (S942). In addition, whether or not an IMS service can be found from contents of a request service included in the call, the second communication terminal 40B makes a user registration request for the session control apparatus 220 together (S944). When the session control apparatus 220 performs a service initiation response to the first communication terminal 40A, the first communication terminal 40A is allowed to transmit user data on the set virtual transmission path to the second communication terminal 40B, and a session is started. Note that, user registration processing for the session control apparatus in (4) is processing independent from (1) to (3), and is executed using an SIP message when a service requiring actuation of the IMS is started after executing (1) to (3).

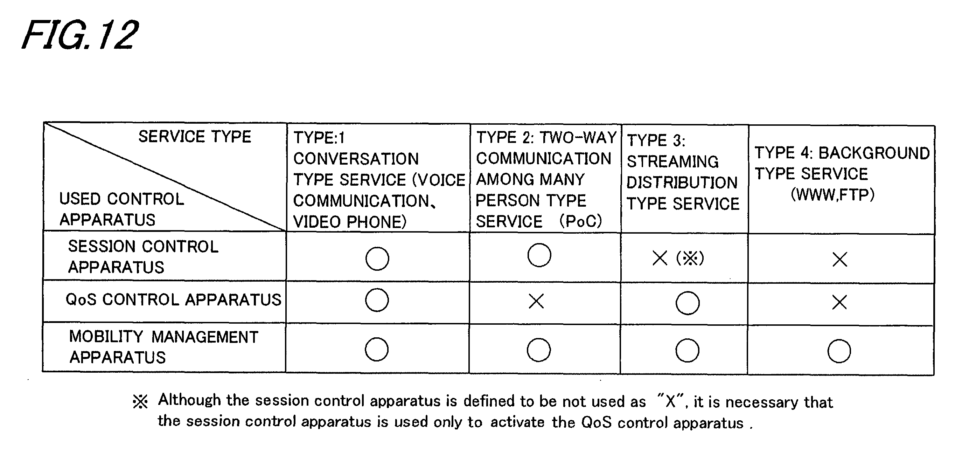

FIG. 12 shows apparatuses which require control and setting depending on a type of a service. The types of the service can be classified into four kinds, including a type 1 of a conversation type service, a type 2 of a two-way communication among many person type service, a type 3 of a streaming distribution type service, and a type 4 of a background type service. Here, although the service type 1 (conversation type service) and the service type 2 (two-way type service) require actuation of the IMS and the processing (4), no actuation of the IMS is basically required when the service type 3 (streaming type service) and the service type 4 (background type service) are used.

The mobility management apparatus 240 is commonly necessary for executing all of the service types in order to perform management of a location of a communication terminal and setting of a virtual transmission path, which are essential for performing communication. Moreover, it is essential for the radio resource control apparatus to secure a band of a radio section, thus being required in any service type. In this way, which control apparatus is used to carry out a session is determined such that a communication terminal performs necessary registration processing depending on a type of a service and selectively uses a control protocol therefor.

### DISCLOSURE OF INVENTION

### PROBLEMS TO BE SOLVED BY THE INVENTION

As described above, conventionally, since a radio access network, an IP core network, and an IMS are configured independently and hierarchically, a communication terminal needs to perform processing before the start of communication of (1) in FIG. 9 and (2) in FIG. 10, and processing of setting a virtual transmission path to the IP core network of (3) in FIG. 10, and user registration and service initiation processing for the IMS are required, thus making processing complicated. Moreover, it is also required to perform various kinds of registration processing of a communication partner terminal with the call of (4) in FIG. 11, which takes processing time by the start of communication and causes a connection delay.

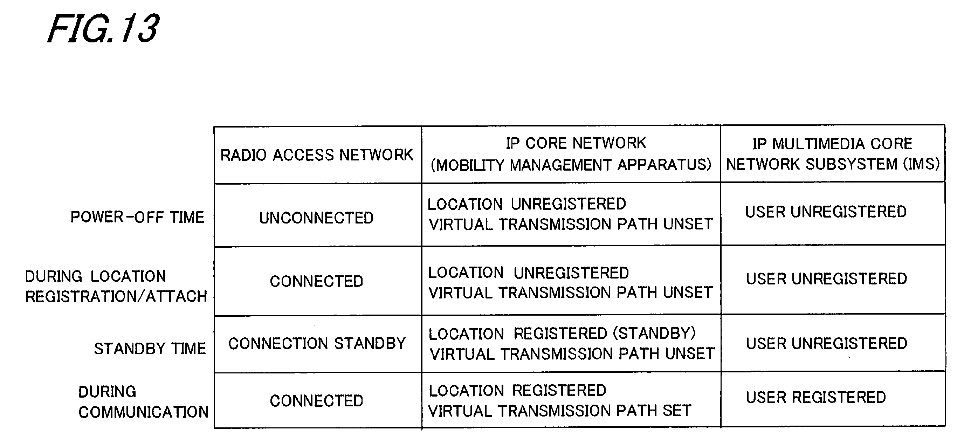

Furthermore, in a network, it has been required that the radio access network, the IP core network, and the IMS manage states of a communication terminal in each layer in order to correspond to all service types. For example, as shown in FIG. 13, the radio access network, the IP core network, and the IMS need to manage the states including power-off time, during location registration/attach, standby time, and communication start, individually and dispersedly, and holds them independently, thus posing a problem of complexity in the management and troublesomeness in the registration processing.

Furthermore, on the premise that the processing (1) shown in FIG. 9 is performed at the time of starting communication, after performing the setting of a virtual transmission path of (2) in FIG. 10, the user registration of (3) in FIG. 10, and the service initiation request processing, it is further required to perform stepwise processing of prompting the communication partner terminal to carry out setting of a virtual transmission path and user registration, using any means like (4) in FIG. 11, thus increasing processing loads and causing a connection delay.

These problems are caused by that the radio access network, the IP core network, and the IMS are configured hierarchically and independently, and that a unique protocol is used in each layer. That is, the problem is that authentication system information, mobility management system information, and session control system information are distributed to be transmitted and processing and control for them are performed in a stepwise manner.

In view of the above-mentioned problem, an object of the present invention is to provide means for integrating these pieces of control information, and to provide a network control apparatus and the like wherein registration processing by cooperation between the layers is realized, and by reducing processing procedure performed by a communication terminal at the time of starting communication and processing loads, elimination of the connection delay is realized.

### MEANS TO SOLVE THE PROBLEMS

In order to solve the above problems, a network control apparatus of the present invention connected to a mobile communication network system which comprises a communication terminal, a mobility management apparatus for managing a location of the communication terminal, and a session control apparatus for controlling a communication session between the communication terminal and a communication partner, includes: receiving means for receiving a location registration request signal from the communication terminal; location registration means for performing a location registration of the communication terminal in the mobility management apparatus based on the location registration request signal; and user registration means for performing a user registration of the communication terminal in the session control apparatus based on the location registration request signal, and when the location registration request signal is received, the location registration means performs the location registration as well as the user registration means performs the user registration.

Furthermore, the network control apparatus of the present invention is characterized in that when the location registration request signal is received from the communication terminal to which the location registration has not been performed, the location registration is performed as well as the user registration is performed.

Furthermore, the network control apparatus of the present invention is characterized in that the location registration request signal is a signal for requesting an update of information that the location registration has been made when a radio access network connected to the communication terminal is changed.

Furthermore, it is characterized in that the session control apparatus is an apparatus which controls a session of an IP multimedia core network control subsystem (IMS), and the network control apparatus of the present invention further includes IMS registration means for generating a user registration request signal in a protocol format in the IMS from the location registration request signal and transmitting the user registration request signal to the session control apparatus, so that the user registration of the communication terminal is performed in the IMS.

Furthermore, it is characterized in that the location registration request signal is a signal in accordance with a protocol format capable of being processed in the mobility management apparatus, and the network control apparatus of the present invention further includes request signal transferring means for converting the location registration request signal into a user registration request signal in a protocol format capable of being processed in the session control apparatus and transferring to the session control apparatus.

Furthermore, the network control apparatus of the present invention is characterized in that after both of a response to the location registration in the mobility management apparatus and a response to the user registration in the session control apparatus are received, a response to the location registration request signal is replied to the communication terminal by adding information that the user registration has been performed thereto.

A network control apparatus of the present invention connected to a mobile communication network system which includes a communication terminal, a mobility management apparatus for managing a location of the communication terminal, and a session control apparatus for controlling a communication session between the communication terminal and a communication partner, includes: receiving means for receiving a service initiation request signal from the communication terminal; call requesting means for requesting the mobility management apparatus to call the communication partner based on the service initiation request signal; and first service initiation request transferring means for transferring a service initiation request to the session control apparatus based on the service initiation request signal, and when the service initiation request signal is received, the call request and the transfer of the service initiation request are performed.

The network control apparatus of the present invention is characterized in that when it is determined that the session control apparatus is activated and a session is established depending on a service type requested by the service initiation request, the service initiation request is transferred to the session control apparatus.

Furthermore, it is characterized in that the network control apparatus of the present invention further includes second service initiation request transferring means for transferring the service initiation request to the network control apparatus which manages the communication partner, when it is determined that communication can be performed by the service type requested by the service initiation request without performing the call request for the mobility management apparatus.

A network control apparatus of the present invention which includes a communication terminal, a mobility management apparatus for managing a location of the communication terminal, a session control apparatus for controlling a communication session between the communication terminal and a communication partner, and a network control apparatus for controlling the communication terminal and each apparatus, is characterized in that the communication terminal has communication terminal location registration request signal transmitting means for transmitting a location registration request signal, the network control apparatus has receiving means for receiving the location registration request signal from the communication terminal, location registration means for performing a location registration of the communication terminal in the mobility management apparatus based on the location registration request signal, and user registration means for performing a user registration in the session control apparatus based on the location registration request signal, and when the network control apparatus receives the location registration request signal transmitted from the communication terminal, the location registration in the mobility management apparatus is performed by the location registration means as well as the user registration in the session control apparatus is performed by the user registration means, so that the location registration and the user registration of the communication terminal are controlled.

A network control apparatus of the present invention which includes a communication terminal, a mobility management apparatus for managing a location of the communication terminal, a session control apparatus for controlling a communication session between the communication terminal and a communication partner, and a network control apparatus for controlling the communication terminal and each apparatus, is characterized in that the communication terminal has service initiation request signal transmitting means for transmitting a service initiation request signal, the network control apparatus has receiving means for receiving the service initiation request signal from the communication terminal, call requesting means for requesting the mobility management apparatus to call the communication partner based on the service initiation request signal, and first service initiation request transferring means for transferring a service initiation request to the session control apparatus based on the service initiation request signal, and when the network control apparatus receives the service initiation request signal transmitted from the communication terminal, the call request to the mobility management apparatus is performed by the call requesting means and further the transfer of the service initiation request to the session control apparatus is performed by the first service initiation request transferring means, so that a call connection and a session connection are controlled.

A program of the present invention causes a computer connected to a mobile communication network system which comprises a communication terminal, a mobility management apparatus for managing a location of the communication terminal, and a session control apparatus for controlling a communication session between the communication terminal and a communication partner, to realize a receiving function of receiving a location registration request signal from the communication terminal, a location registration function of performing a location registration of the communication terminal in the mobility management apparatus based on the location registration request signal, a user registration function of performing a user registration in the session control apparatus based on the location registration request signal, and a function of performing the location registration by the location registration function as well as the user registration by the user registration function, when the location registration request signal is received.

A program of the present invention causes a computer connected to a mobile communication network system, which comprises a communication terminal, a mobility management apparatus for managing a location of the communication terminal, an a session control apparatus for controlling a communication session between the communication terminal and a communication partner, to comprise a receiving function of receiving a service initiation request signal from the communication terminal, a call requesting function of requesting a mobility management apparatus to call the communication partner based on the service initiation request signal, and a first service initiation request transferring function of transferring a service initiation request to the session control apparatus based on the service initiation request signal, and to realize a function of performing the call request and the transfer of the service initiation request, when the service initiation request signal is received.

The communication terminal of the present invention connected to the mobile communication network system includes communication terminal location registration request signal transmitting means for transmitting the location registration request signal to the network control apparatus, and receiving means for receiving a response to the location registration request signal including information that the user registration has been performed, from the network control apparatus.

The communication terminal of the present invention connected to the mobile communication network system includes service initiation request signal transmitting means for transmitting the service initiation request signal to the network control apparatus, and receiving means for receiving a response to the service initiation request signal which shows that the call connection and session connection processing has been performed, from the network control apparatus.

A method for controlling a mobile communication network system of the present invention including a communication terminal, mobility management means for managing a location of the communication terminal, and session control means for controlling a communication session between the communication terminal and a communication partner, is characterized in that based on a location registration request signal received from the communication terminal, a location registration of the communication terminal is performed in the mobility management means and a user registration of the communication terminal is performed in the session control means.

A method for controlling a mobile communication network system of the present invention including a communication terminal, mobility management means for managing a location of the communication terminal, and session control means for controlling a communication session between the communication terminal and a communication partner, is characterized in that when a service initiation request signal is received from the communication terminal, a call to the communication partner is requested for the mobility management means based on the service initiation request signal, and a service initiation request is transferred to the session control means based on the service initiation request signal.

### ADVANTAGE OF THE INVENTION

By applying the present invention, when a communication terminal transmits a location registration request signal in a network control apparatus, the network control apparatus which has received the location registration request signal outputs a signal to perform location registration to a mobility management apparatus and output a signal to perform user registration to a session control apparatus. Hence, only by transmitting a location registration signal by the communication terminal, registration processing is executed for each apparatus.

In other words, the network control apparatus integrates information which has been conventionally processed individually at an IP core network level and at an IMS level, such as authentication system information managed in a subscriber management server or a subscriber information management apparatus, mobility management system information managed in the mobility management apparatus, and session control system information managed in the session control apparatus, and converts and transfers them to an IP core network and an IMS at the time of processing of a location registration/attach request, resulting that registration processing and state management in the communication terminal can be simplified and speedy processing at the time of actuating a service is realized. Moreover, the communication terminal is managed so as to be in a state of being connected virtually at all times even in no-communication, thus improving convenience of a service.

Furthermore, since the network control apparatus can perform processing by determining whether an IMS is used depending on a service or not, the communication terminal is required only to make a service initiation request and can request a service by integral procedure.

In addition, it is made possible to eliminate procedure of prompting a partner communication terminal to perform communication connection and registration at an IMS level, resulting that there is an advantage of effective utilization of a resource and reduction of overhead.

### BRIEF DESCRIPTION OF DRAWINGS

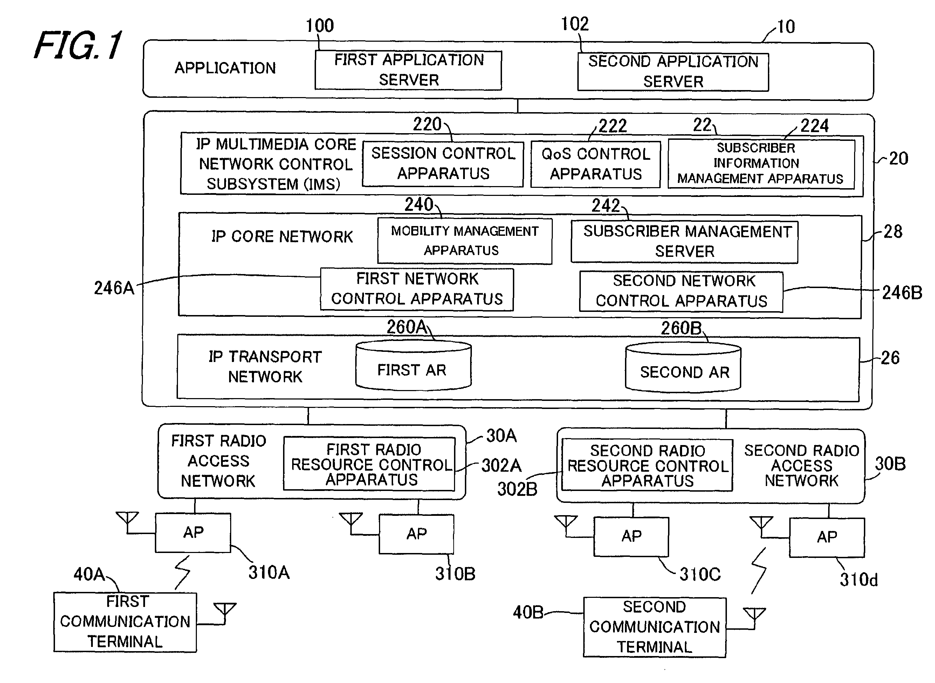

[FIG. 1] FIG. 1 is a view showing the outline of a network system when the present invention is applied thereto;

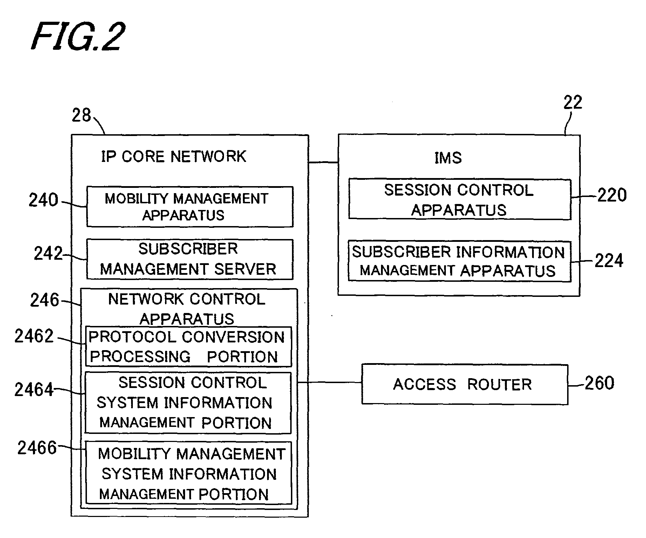

[FIG. 2] FIG. 2 is a view showing the structure of a network control apparatus and the like;

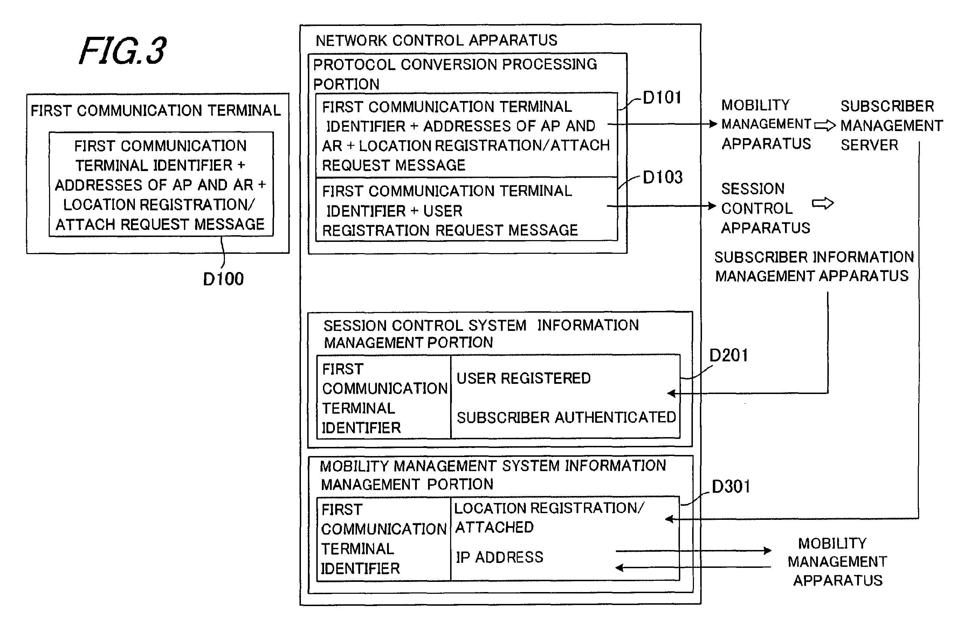

[FIG. 3] FIG. 3 is a view illustrating a flow of data in a communication terminal and the network control apparatus;

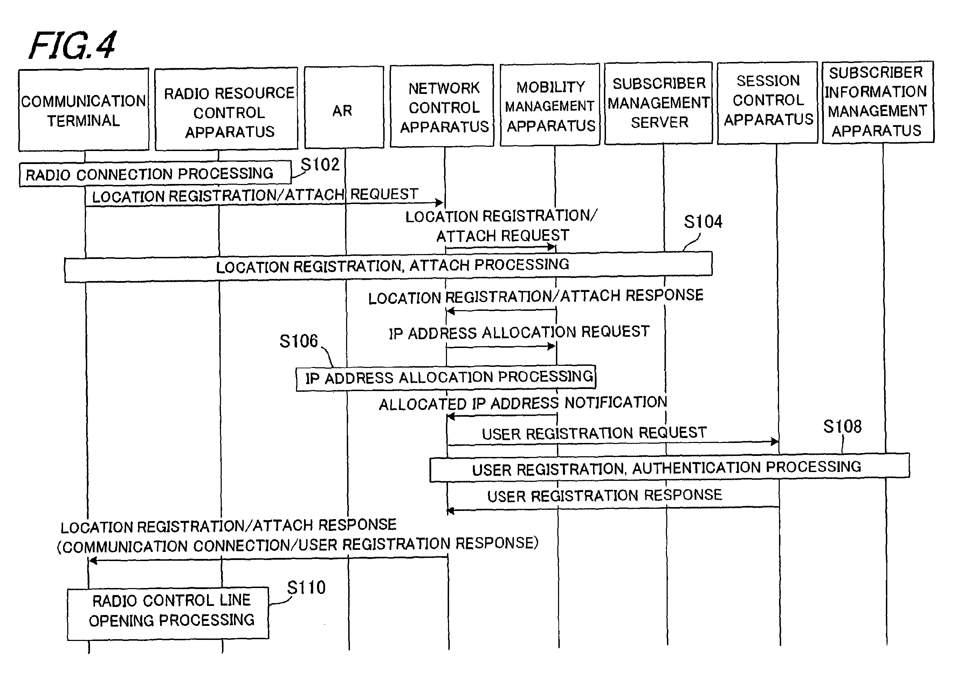

[FIG. 4] FIG. 4 is a view illustrating connection procedure when the present invention is applied;

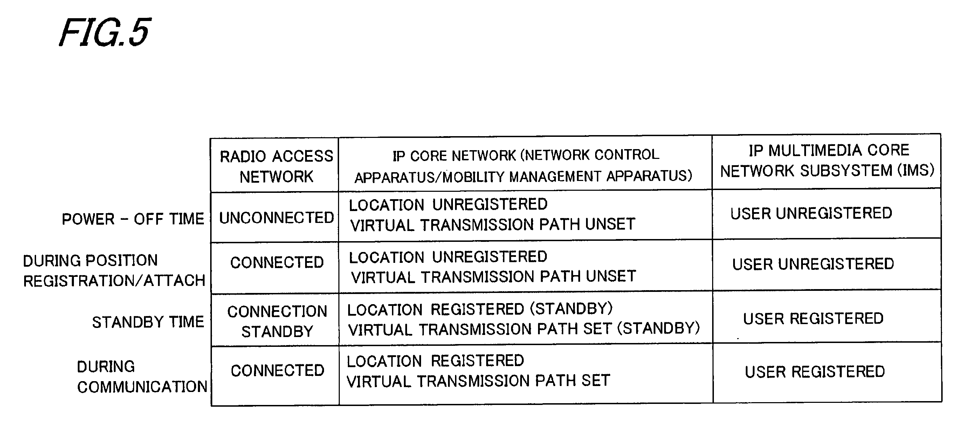

[FIG. 5] FIG. 5 is a view illustrating the state of the communication terminal when the present invention is applied;

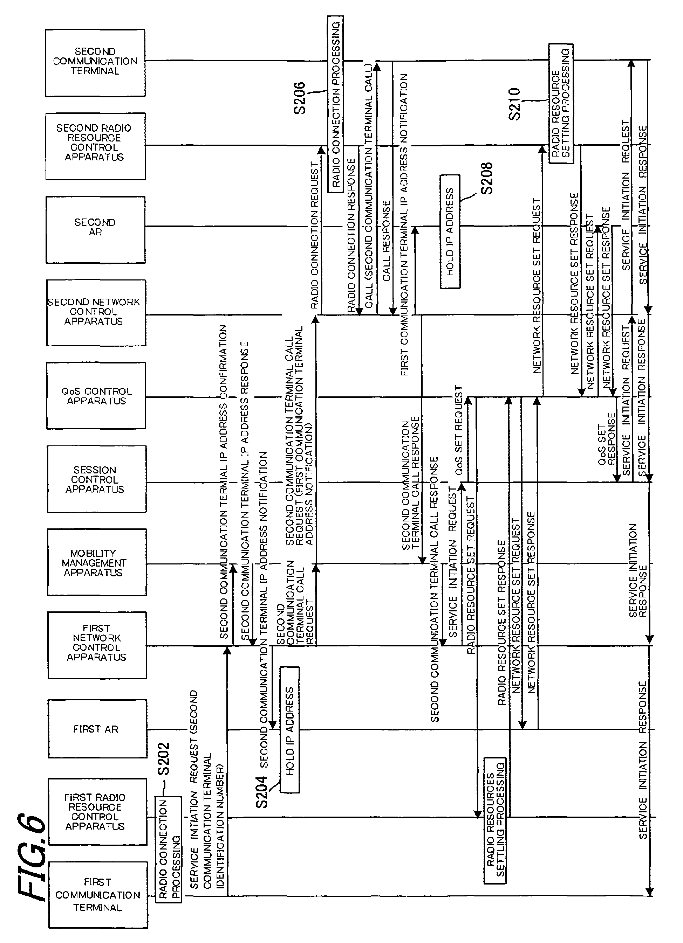

[FIG. 6] FIG. 6 is a view illustrating processing procedure when the present invention is applied;

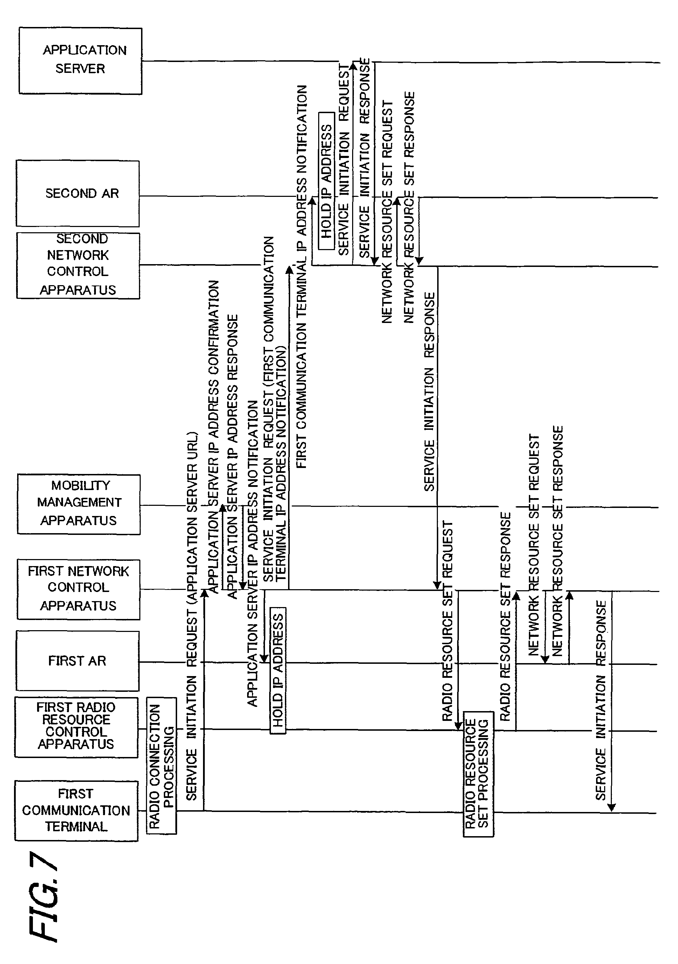

[FIG. 7] FIG. 7 is a view illustrating processing procedure when the present invention is applied;
[FIG. 8] FIG. 8 is a view showing the outline of a conventional network system;
[FIG. 9] FIG. 9 is a view illustrating connection procedure of the conventional network system;
[FIG. 10] FIG. 10 is a view illustrating connection procedure of the conventional network system;
[FIG. 11] FIG. 11 is a view illustrating connection procedure of the conventional network system;
[FIG. 12] FIG. 12 is a view illustrating the state of each control apparatus of the conventional network system; and
[FIG. 13] FIG. 13 is a view illustrating the state of a communication terminal in the conventional network system.

### EXPLANATIONS OF NUMERALS

- 10: application
100 first application server
102 second application server
- 20: mobile communication network
- 22: IP multimedia core network control subsystem
- 24, 28: IP core networks
240 mobility management apparatus
242 subscriber management server
246 network control apparatus
246A first network control apparatus
246B second network control apparatus
- 26: IP transport network
260 AR
260A first AR
260B second AR
- 30: radio access network
30A first radio access network
30B second radio access network
- 40: communication terminal
40A first communication terminal
40B second communication terminal

### BESTMODE FOR CARRING OUT THE INVENTION

Now, referring to the drawings, preferred embodiments of the present invention will hereinafter be described. FIG. 1 is a view showing the outline of a network system in mobile communication when the present invention is applied thereto. A mobile communication network 20 is composed of an IP multimedia core network control subsystem (IMS) 22, an IP core network 28, and an IP transport network 26.

Furthermore, the IMS 22 is arranged with a session control apparatus 220, a QoS control apparatus 222, and a subscriber information management apparatus 224. The IP core network 28 is arranged with a mobility management apparatus 240, a subscriber management server 242, and network control apparatuses 246 (a first network control apparatus 246A and a second network control apparatus 246B), and the IP transport network 26 is arranged with access routers (ARs) 260 (a first AR 260A and a second AR 260B).

Furthermore, the mobile communication network 20 is connected to an application 10 including a first application server 100 and a second application server 102 and radio access networks 30 for connecting to communication terminals.

The radio access network 30 is provided with a radio resource control apparatus 302, and controls a communication terminal 40. The communication terminal 40 is connected to the radio resource control apparatus 302 through an access point (AP) 310 so as to be able to access to the network.

In the present embodiment, a first radio access network 30A and a second radio access network 30B are provided as the radio access network. The first radio access network 30A is provided with a first radio resource control apparatus 302A. In addition, a first communication terminal 40A is connected to the first radio resource control apparatus 302A, for example, through the AP 310A so as to be able to access to the first radio access network 30A.

Moreover, the second radio access network 30B is provided with a second radio resource control apparatus 302B. In addition, a second communication terminal 40B is connected to the second radio resource control apparatus 302B, for example, through the AP 310D so as to be able to access to the second radio access network 30B.

Note that, the same components in the present embodiment as that in the conventional network system shown in FIG. 8, are allotted with identical reference numerals and the detailed description will be omitted.

Here, network control apparatuses 246 for integrally treating a various kinds of control signals having a different system, such as authentication system information, mobility management system information, and session control system information, are arranged corresponding to the ARs 260 as shown in FIG. 1. The network control apparatus 246 integrally receives signals of the authentication system information, the mobility management system information, and the session control system information from the communication terminal 40 by way of AR 260 and converts the signals into control signals for the IP core network 28 and the IMS 22, respectively, to transfer. Thereby, there is an advantage of reducing transmission of control information from the communication terminal 40 and amount of control information to be transferred to the network. Moreover, by managing state information which has been individually managed between the layers commonly and integrally in the network control apparatus 246, there is an advantage of simplifying the state management in the network side and in the communication terminal. Hereinafter, the network control apparatus 246 will be described.

FIG. 2 is a view illustrating the structure of the network control apparatus 246. The network control apparatus 246 is provided with a protocol conversion processing portion 2462, a session control system information management portion 2464, and a mobility management system information management portion 2466. Moreover, the network control apparatus 246 is connected to the IP core network 24, and further connected to the access router (AR) 260 and the IMS 20.

The protocol conversion processing portion 2462 is a processing portion which performs processing of transferring a location registration/attach request message from the communication terminal 40 to the IP core network 24, or converting the location registration/attach request message into a user registration message of an SIP, so as to transfer to the IMS 20.

The session control system information management portion 2464 is a functional portion which manages communication terminal authenticated/unauthenticated information in the subscriber information management apparatus 224 of the IMS 20, and user registered/unregistered information in the session control apparatus 220.

The mobility management system information management portion 2466 is a functional portion which manages location registration/attached/unattached information in the mobility management apparatus 240 of the IP core network. Thereby, the network control apparatus 246 recognizes that the communication terminal 40 has been authenticated, and when there is a location registration update request which is regularly made by the communication terminal 40 and there is no change in a location registration information compared with prior location registration information (when there is no change in addresses of an AP and an AR which are (located) in a wirelessly connectable area), the location registration update request is not caused to be transferred to the mobility management apparatus 240, thus making it possible also to reduce amount of control information.

Furthermore, in the mobility management system information management portion 2466, since an IP address for setting a virtual transmission path of the communication terminal is managed during no-communication, procedure that the mobility management apparatus 240 activates the AR 260 at the start of communication to allocate the IP address will be omitted.

FIG. 3 is a view showing an example of the structure of data controlled and managed in the network control apparatus 246. Here, description will be made taking a case where a first communication terminal 40A is controlled as an example. First, control information of a location registration/attach request based on a location registration/attach request protocol is transmitted during no-communication. As specified contents, as shown in D101, an identifier of the first communication terminal 40A, addresses of the AP (the AP 310A) and the AR 260 (the first AR 260A) where the first communication terminal 40A is located, and a location registration/attach request message are included. In the network control apparatus 246, by transferring received control information of D101 to the mobility management apparatus 240, location registration processing and attach processing are performed as usual.

Thereafter, when information showing that the first communication terminal 40A has been authenticated and information showing that the location registration has been performed are responded from the mobility management apparatus 240 to the network control apparatus 246, the network control apparatus 246 holds them in a mobility management system information management portion 2466. At the same time, based on the control information of D101, the network control apparatus 246 requests the mobility management apparatus 240 to allocate an IP address to the first communication terminal 40A. Thereby, the mobility management apparatus 240 activates the AR 260 and performs processing of allocating the IP address for setting a virtual transmission path. Note that, the processing may be performed simultaneously and in parallel with the location registration/attach processing.

The AR 260 transmits the allocated IP address to the mobility management apparatus 240. Then, upon response from the mobility management apparatus 240 to the network control apparatus 246, the network control apparatus 246 holds it in the mobility management system information management portion 2466 (D301).

Furthermore, in the protocol conversion processing portion 2462, the network control apparatus 246 converts the control information of D101 into control information (a user registration message of an SIP) including an identifier of the first communication terminal 40A and a user registration request message as shown in D103, to transmit to the session control apparatus 220 as a user registration request. Thereby, the user registration in the session control apparatus 220 and the authentication in the subscriber information management apparatus 224 are performed, respectively, and by the response from the session control apparatus 220, the network control apparatus 246 holds it in the session control system information management portion 2464 (D201).

Next, protocol procedure of location registration/user registration in the mobile communication network using the network control apparatus 246 will be described with FIG. 4. When the communication terminal 40 is activated, a radio control line is set with the radio resource control apparatus 302 by radio connection processing (S102). Then, the communication terminal 40 transmits a location registration/attach request to the network control apparatus 246.

The network control apparatus 246 transmits the location registration/attach request received from the communication terminal to the mobility management apparatus 240. Thereby, location registration and attach processing is performed as usual (S104). When the location registration and attach processing is performed between the mobility management apparatus 240 and the subscriber management server 242, the mobility management apparatus 240 is requested to allocate an IP address to the communication terminal 40 based on the location registration/attach request. Note that, the processing may be performed simultaneously and in parallel with the location registration/attach processing. The mobility management apparatus 240 performs processing of allocating the IP address of the communication terminal 40 for setting a virtual transmission path by giving instructions to the AR 260, and performs notification by including the IP address in a response to the network control apparatus 246 (S106).

Furthermore, the network control apparatus 246 converts the location registration/attach request into a user registration request for the session control apparatus 220 to transmit. When user authentication and user registration are performed between the session control apparatus 220 and the subscriber information management apparatus 224, respectively, the session control apparatus 220 responds to the network control apparatus 246 by including user authentication/registration information. Thereby, processing procedure of the user registration and authentication that is conventionally transmitted/received for user registration from the communication terminal 40 again after the processing of the location registration/attach request, is simplified (S108).

When the processing so far is completed, the network control apparatus 246 transmits a location registration/attach response to the communication terminal 40, and at this time, the communication terminal 40 is notified that communication connection at an IP core network level and user registration at an IMS level are also completed. Thus far, a series of processing before the start of communication is completed, and by single location registration/attach request from the communication terminal 40, the location registration and processing of allocating an IP address for setting a virtual transmission path in the mobility management apparatus 240, the attach processing in the subscriber management server 242, the user registration processing in the session control apparatus 220, and the authentication processing in the subscriber information management apparatus 224 are performed at the same time.

Here, the management state of a communication terminal in a network will be shown in FIG. 5. FIG. 5 is a view showing the state of the communication terminal 40 by dividing into "power-off time", "during location registration/attach", "standby time", and "during communication". Even in the standby time (during no-communication), the communication terminal 40 is registered at levels of the IP core network 28 and the IMS 22. Hence, the state is shifted to a standby state capable of setting a virtual transmission path immediately, which is substantially same as the state of being connected to the mobile communication network at all times.

Next, protocol procedure at the start of communication will be described with FIG. 6. Here, it is assumed that not only the first communication terminal 40A but also the second communication terminal 40B perform the processing described in FIG. 4. As described above, since the IP address for setting a virtual transmission path has been already held by the first network control apparatus 246A, processing of requesting the IP address allocation from the communication terminal 40, which has been carried out in a conventional technique, can be omitted, thus the first communication terminal 40A is able to transmit a signal/signals of a service initiation request directly to the first network control apparatus 246A. At this time, when a communication partner is the second communication terminal 40B, the service initiation request is made after specifying an identification number of the second communication terminal 40B.

The first network control apparatus 246A confirms the IP address for setting a virtual transmission path of the second communication terminal 40B with the mobility management apparatus 240, based on the identification number of the second communication terminal 40B. The mobility management apparatus 240 responds the IP address for setting the virtual transmission path of the second communication terminal 40B to the first network control apparatus 246A. The first network control apparatus 246A notifies the first AR 260A of the IP address, and IP addresses of the first communication terminal 40A and the second communication terminal 40B are held in association with each other in the first AR 260A (S204).

Subsequently, the first network control apparatus 246A requests the mobility management apparatus 240 to call the second communication terminal 40B. This is different from calling in a meaning that communication connection to the IP core network and user registration to the IMS are prompted to a communication partner terminal like in a conventional technique, but means that (a user of) the second communication terminal 40B is notified that a service initiation request was made from the first communication terminal 40A and the second communication terminal 40B is called so that the communication can be started immediately. When the call request is made to the second network control apparatus 246B, the mobility management apparatus 240 notifies the call request by including the identification number of the first communication terminal 40A and the IP address for setting the virtual transmission path of the first communication terminal 40A. Then, when the second communication terminal 40B responds to the call, the IP addresses of the first communication terminal 40A and the second communication terminal 40B are held in association with each other in the second AR 260B (S208). Thereby, the virtual transmission path between the first communication terminal 40A side and the second communication terminal 40B side is established.

The second network control apparatus 246B makes a response by including information that the second communication terminal 40B is registered at the IMS 22 level, as the response to the call request. When receiving the response to the call request, the first network control apparatus 246A transfers the service initiation request to the session control apparatus 220. Here, by including information showing a fact that the first communication terminal 40A and the second communication terminal 40B have been already registered at the IMS 22 level, there is no need of performing processing of prompting the user registration and authentication from the session control apparatus 220 to the second communication terminal 40B.

The session control apparatus 220 performs a QoS setting request based on the service initiation request to the QoS control apparatus 222, and the QoS control apparatus 222 requests the first radio resource control apparatus 302A and the second radio resource control apparatus 302B to secure a radio resource, and requests the first AR 260A and the second AR 260B to secure a network resource. Then, when these resources are secured, the session control apparatus 220 transfers the service initiation request through the second network control apparatus 246B to the second communication terminal 40B, and after the second communication terminal 40B responds, it is made possible to start a session between the first communication terminal 40A and the second communication terminal 40B.

Note that, apparatuses which require control and setting depending on a type of a service are shown in FIG. 12, and types of the service can be classified into four types, including a type 1 of a conversation type service, a type 2 of a two-way communication among many person type service, a type 3 of a streaming distribution type service, and a type 4 of a background type service. Here, although the service type 1 (conversation type service) and the service type 2 (two-way type service) require actuation of the IMS 22, no actuation of the IMS 22 is basically required when the service type 3 (streaming type service) and the service type 4 (background type service) are used.

The procedure mentioned above is an example of processing when a service initiation request by a service type using the IMS 22 is made, and in the case of a service initiation request by the service type 3 or 4 not using the IMS 22, the network control apparatus 246 is able to set a session by actuating the mobility management apparatus 240, the QoS control apparatus 222, and the radio resource control apparatus 302, respectively, without actuating the session control apparatus 220. Moreover, when the QoS control apparatus 222 is activated like in the service type 3, by allowing the network control apparatus 246 to make a QoS setting request directly to the QoS control apparatus 222, or by causing the network control apparatus to share a QoS policy same as that of the QoS control apparatus 222, it is configured so that a QoS request can be made to the AR 260 and the radio resource control apparatus 302 directly, and thereby there is no need of actuating the QoS control apparatus 222 through the session control apparatus 220, and further it is made possible to simplify the processing procedure.

Communication setting processing by an application of such present invention will be shown in FIG. 7. In this case, a service initiation request from the first communication terminal 40A is premised on, for example, a service like a streaming distribution of the service type 3 shown in FIG. 12 as the service not using the IMS 22, and the service initiation request is to be a request in which a URL or the like of the application server is specified.

When the request is received, the first network control apparatus 246A confirms an IP address of the application server with the mobility management apparatus 240 to notify to the first AR 260A. When the first network control apparatus 246A transmits the service initiation request to the second network control apparatus 246B to which the application server is served, the second network control apparatus 246B notifies the IP address of the first communication terminal 40A included in the request to the second AR 260B, and the second AR 260B holds it, and thereby a virtual transmission path is set.

The second network control apparatus 246B transfers the service initiation request to the application server, and requests setting of a network resource to the second AR 260B. In this way, the processing by the QoS control apparatus 222 is substituted by the network control apparatus 246, thus making it possible to simplify the processing at the IMS level. The first network control apparatus 246A which has received the service initiation response requests setting of a radio resource in the first radio resource control apparatus 302A and setting of a network resource in the first AR 260A, respectively, and upon the setting, the service initiation response is made to the first communication terminal 40A, and thereby the first communication terminal 40A can start communication with the application server. In this way, according to the application of the present invention, it is possible to greatly reduce the number of processing.

Note that, description has been made using the two in the network control apparatus 246A, the AR 260 and the like in the present embodiment, but without limitation thereto, a plurality of apparatuses may be provided. Moreover, each AR 260 may be connected to a plurality of radio resource control apparatuses 302.

Furthermore, a radio network system used by a communication terminal may be a network system using a mobile phone such as an IMT 2000, and may be a radio network system using any system such as a network system using a radio LAN including 802.11b and the like.

## Claims

1. A network control apparatus connected to a mobile communication network system which comprises a communication terminal, a mobility management apparatus for managing a location of the communication terminal, and a session control apparatus for controlling a communication session between the communication terminal and a communication partner, comprising:
receiving means for receiving a location registration request signal from the communication terminal;
location registration means for performing a location registration of the communication terminal in the mobility management apparatus based on the location registration request signal; and
user registration means for performing a user registration of the communication terminal in the session control apparatus based on the location registration request signal,
wherein
when the location registration request signal is received, the location registration means performs the location registration as well as the user registration means performs the user registration.

2. The network control apparatus according to Claim 1, wherein when the location registration request signal is received from the communication terminal to which the location registration has not been performed, the location registration is performed as well as the user registration is performed.

3. The network control apparatus according to Claim 1 or 2, wherein the location registration request signal is a signal for requesting an update of information that the location registration has been made when a radio access network connected to the communication terminal is changed.

4. The network control apparatus according to any one of Claims 1 to 3, wherein the session control apparatus is an apparatus which controls a session of an IP multimedia core network control subsystem (IMS), and further comprising IMS registration means for generating a user registration request signal in a protocol format in the IMS from the location registration request signal and transmitting the user registration request signal to the session control apparatus, so that the user registration of the communication terminal is performed in the IMS.

5. The network control apparatus according to any one of Claims 1 to 4, wherein the location registration request signal is a signal in accordance with a protocol format capable of being processed in the mobility management apparatus, and further comprising request signal transferring means for converting the location registration request signal into a user registration request signal in a protocol format capable of being processed in the session control apparatus and transferring to the session control apparatus.

6. The network control apparatus according to any one of Claims 1 to 5, wherein after both of a response to the location registration in the mobility management apparatus and a response to the user registration in the session control apparatus are received, a response to the location registration request signal is replied to the communication terminal by adding information that the user registration has been performed thereto.

7. A network control apparatus connected to a mobile communication network system which comprises a communication terminal, a mobility management apparatus for managing a location of the communication terminal, and a session control apparatus for controlling a communication session between the communication terminal and a communication partner, comprising:
receiving means for receiving a service initiation request signal from the communication terminal;
call requesting means for requesting the mobility management apparatus to call the communication partner based on the service initiation request signal; and
first service initiation request transferring means for transferring a service initiation request to the session control apparatus based on the service initiation request signal,
wherein
when the service initiation request signal is received, the call request and the transfer of the service initiation request are performed.

8. The network control apparatus according to Claim 7, wherein when it is determined that the session control apparatus is activated and a session is established depending on a service type requested by the service initiation request, the service initiation request is transferred to the session control apparatus.

9. The network control apparatus according to Claim 7 or 8, further comprising second service initiation request transferring means for transferring the service initiation request to the network control apparatus which manages the communication partner, when it is determined that communication can be performed by the service type requested by the service initiation request without performing the call request for the mobility management apparatus.

10. A mobile communication network system comprising:
a communication terminal;
a mobility management apparatus for managing a location of the communication terminal;
a session control apparatus for controlling a communication session between the communication terminal and a communication partner, and
a network control apparatus for controlling the communication terminal and each apparatus,
wherein
the communication terminal has communication terminal location registration request signal transmitting means for transmitting a location registration request signal,
the network control apparatus has:
receiving means for receiving the location registration request signal from the communication terminal;
location registration means for performing a location registration of the communication terminal in the mobility management apparatus based on the location registration request signal, and
user registration means for performing a user registration in the session control apparatus based on the location registration request signal, and
when the network control apparatus receives the location registration request signal transmitted from the communication terminal, the location registration in the mobility management apparatus is performed by the location registration means as well as the user registration in the session control apparatus is performed by the user registration means, so that the location registration and the user registration of the communication terminal are controlled.

11. A mobile communication network system comprising:
a communication terminal;
a mobility management apparatus for managing a location of the communication terminal;
a session control apparatus for controlling a communication session between the communication terminal and a communication partner, and
a network control apparatus for controlling the communication terminal and each apparatus,
wherein
the communication terminal has service initiation request signal transmitting means for transmitting a service initiation request signal,
the network control apparatus has:
receiving means for receiving the service initiation request signal from the communication terminal;
call requesting means for requesting the mobility management apparatus to call the communication partner based on the service initiation request signal, and
first service initiation request transferring means for performing a transfer of a service initiation request to the session control apparatus based on the service initiation request signal, and
when the network control apparatus receives the service initiation request signal transmitted from the communication terminal, the call request to the mobility management apparatus is performed by the call requesting means and further the transfer of the service initiation request to the session control apparatus is performed by the first service initiation request transferring means, so that a call connection and a session connection are controlled.

12. A program for causing a computer connected to a mobile communication network system which comprises a communication terminal, a mobility management apparatus for managing a location of the communication terminal, and a session control apparatus for controlling a communication session between the communication terminal and a communication partner, to realize:
a receiving function of receiving a location registration request signal from the communication terminal;
a location registration function of performing a location registration of the communication terminal in the mobility management apparatus based on the location registration request signal;
a user registration function of performing a user registration in the session control apparatus based on the location registration request signal, and
a function of performing the location registration by the location registration function as well as the user registration by the user registration function, when the location registration request signal is received.

13. A program for causing a computer connected to a mobile communication network system, which comprises a communication terminal, a mobility management apparatus for managing a location of the communication terminal, an a session control apparatus for controlling a communication session between the communication terminal and a communication partner, to comprise:
a receiving function of receiving a service initiation request signal from the communication terminal;
a call requesting function of requesting a mobility management apparatus to call the communication partner based on the service initiation request signal, and
a first service initiation request transferring function of transferring a service initiation request to the session control apparatus based on the service initiation request signal, and
to realize: a function of performing the call request and the transfer of the service initiation request, when the service initiation request signal is received.

14. The communication terminal connected to the mobile communication network system according to any one of Claims 1 to 6, further comprising:
communication terminal location registration request signal transmitting means for transmitting the location registration request signal to the network control apparatus, and
receiving means for receiving a response to the location registration request signal including information that the user registration has been performed, from the network control apparatus.

15. The communication terminal connected to the mobile communication network system according to any one of Claims 7 to 9, further comprising:
service initiation request signal transmitting means for transmitting the service initiation request signal to the network control apparatus, and receiving means for receiving a response to the service initiation request signal which shows that the call connection and session connection processing has been performed, from the network control apparatus.

16. A method for controlling a mobile communication network system comprising a communication terminal, mobility management means for managing a location of the communication terminal, and session control means for controlling a communication session between the communication terminal and a communication partner, wherein
based on a location registration request signal received from the communication terminal, a location registration of the communication terminal is performed in the mobility management means and a user registration of the communication terminal is performed in the session control means.

17. A method for controlling a mobile communication network system comprising a communication terminal, mobility management means for managing a location of the communication terminal, and session control means for controlling a communication session of the communication terminal and a communication partner, wherein
when a service initiation request signal is received from the communication terminal, a call to the communication partner is requested for the mobility management means based on the service initiation request signal, and a service initiation request is transferred to the session control means based on the service initiation request signal.
